# EUROPÄISCHE PATENTSCHRIFT

(11) **EP 3 144 550 B1**
(45) Veröffentlichungstag und Bekanntmachung des Hinweises auf die Patenterteilung: **04.12.2019**
(21) Anmeldenummer: 16186111.7
(22) Anmeldetag: 29.08.2016
(51) Int. Cl.: F16C 25/06, F16C 25/08

(54) **SPANNVORRICHTUNG UND VERFAHREN ZUM VORSPANNEN EINES LAGERS**
CLAMPING DEVICE AND METHOD FOR PRE-TENSIONING A BEARING
DISPOSITIF DE SERRAGE ET PROCEDE DE PRECONTRAINTE D'UN PALIER

(30) Priorität: 10.09.2015 DE 102015217323
(43) Veröffentlichungstag der Anmeldung: 22.03.2017
(73) Patentinhaber: Aktiebolaget SKF, 41 550 Göteborg (SE)
(72) Erfinder: Reichert, Jürgen, 97499 Donnersdorf (DE); Fritz, Dominik, 97070 Würzburg (DE); Liesegang, Hans-Jürgen, 26419 Schortens (DE)
(74) Vertreter: Kuhstrebe, Jochen

(56) Entgegenhaltungen:
- WO-A1-2013/152850
- DE-A1- 3 914 552
- DE-A1- 19 946 383
- DE-A1-102009 058 355
- JP-U- S6 058 957
- SU-A1- 1 732 034

## Beschreibung

Vorliegende Ausführungsbeispiele liegen auf dem Gebiet der Spannvorrichtungen zum Vorspannen eines Lagers.

In vielen Bereichen der Technik werden Lager eingesetzt, die, je nach Einsatzgebiet, verschiedene Formen annehmen können. Beispielsweise gibt es Axiallager, die eine Bewegung eines drehbar zu lagernden Bauteils in axiale Richtung verhindern können, Radiallager, die eine Bewegung des Bauteils in radiale Richtung verhindern können, oder auch kombiniert belastbare Lager. Letztere können paar- oder gruppenweise mit weiteren Lagern desselben Typs an einer gemeinsamen Welle montiert werden, beispielsweise um ein Spiel der Welle zu verringern oder sogar zu verhindern. Hierzu kann eine Vorspannung vorgenommen werden, durch die das Spiel bereits in einem Ruhezustand einer Anwendung soweit wie erforderlich verringert wird. Viele Anwendungen können jedoch aufgrund ihrer Größe nur sehr eingeschränkte Möglichkeiten zulassen, um die Vorspannung mit akzeptablem Aufwand vorzunehmen, da beispielsweise Lager und mit diesen gelagerte Wellen mehrere Tonnen an Masse aufweisen können, was eine Handhabung deutlich erschwert. Ferner kann dabei eine erforderte Genauigkeit möglicherweise nicht erreicht werden, da unter Umständen bereits geringe Temperaturunterschiede zu einer nicht vernachlässigbaren Wärmeausdehnung von Lagerbauteilen führen können, oder die Möglichkeit bestehen kann, dass aufgrund der Masse der Lager, die beispielsweise über einer Tonne liegen kann, Setzungen durch ein Eigengewicht der Lager oder Wellen auftreten. Dies kann z. B. Windkraftanlagen betreffen, aber auch andere Anwendungen, bei denen Lager ab einer vorbestimmten Mindestgröße oder Mindestmasse zum Einsatz kommen.

Aus der DE 10 2009 058355 A1 ist eine hydraulische Spannvorrichtung für Kegelrollenlager bekannt.

Aus der WO2013/152850 A1 ist eine Spannvorrichtung für Innenringe eines Kegelrollenlagers bekannt.

Aus der SU 1 732 034 A1, die eine Spannvorrichtung nach dem Oberbegriff des Anspruchs 1 offenbart, sind federbelastete Schrägkugellager bekannt.

Aus der DE 199 46 383 A1 sind hydraulisch vorgespannte Schrägkugellager bekannt. Aus der DE 39 14 552 A1 sind Wälzlager in O-Anordnung bekannt, bei denen die Lageraußenringe in sich gegenseitig abstützenden Zwischenhülsen aufgenommen sind. Aus der JP S60 58957 U sind Wälzlager in X-Anordnung bekannt, bei denen die Lageraußenringe in gekoppelten Zwischenhülsen aufgenommen sind.

Es ist daher wünschenswert, ein verbessertes Konzept für eine Vorspannung eines Lagers zu schaffen.

Diesen Anforderungen tragen eine Spannvorrichtung und ein Verfahren zum Vorspannen eines Lagers gemäß den unabhängigen Patentansprüchen Rechnung.

Gemäß einem ersten Aspekt beziehen sich Ausführungsbeispiele auf eine Spannvorrichtung zum Vorspannen eines Lagers. Die Spannvorrichtung umfasst das Lager, welches einen ersten Lagerring und einen zweiten Lagerring aufweist. Dabei ist das Lager dazu ausgebildet, eine Vorspannkraft in radiale Richtung und/oder in axiale Richtung zwischen dem ersten und zweiten Lagerring zu übertragen. Die Spannvorrichtung umfasst außerdem ein mit dem ersten Lagerring gekoppeltes Bauteil. Zusätzlich umfasst die Spannvorrichtung ein Stützelement zum Abstützen des Bauteils gegen den zweiten Lagerring derart, dass ein geschlossener Kraftfluss von dem ersten Lagerring über das Bauteil und das Stützelement zu dem zweiten Lagerring entsteht. Die Spannvorrichtung umfasst weiterhin eine zwischen dem ersten Lagerring und dem Bauteil axial verschiebbar angeordnete Hülse. Die Hülse ist dazu ausgebildet, bei einer axialen Verschiebung der Hülse gegenüber dem Bauteil eine Veränderung der Vorspannkraft zu bewirken. Die Vorspannkraft kann, anders ausgedrückt, in einem beliebigen Winkel zwischen 0° und 90° zu der Drehachse des Lagers wirken. Das Lager kann somit z. B. ein Schrägkugellager oder Kegelrollenlager sein. Die Hülse kann beispielsweise eine im Wesentlichen zylindrische Form aufweisen, und mit ihrer radial innenliegenden oder außenliegenden Wand an einem der Lagerringe anliegen. Es kann somit ermöglicht werden, eine Einstellung einer gewünschten Vorspannung erheblich zu erleichtern. Zudem kann es so möglich sein, Korrekturen bei einer Einstellung der Vorspannung nach einer Endmontage einer Anlage vorzunehmen, welche die Spannvorrichtung umfasst. Das

Die Spannvorrichtung umfasst ferner ein weiteres Lager mit einem Innenring und einem Außenring. Das Stützelement umfasst hierbei das weitere Lager mit einem Innenring und einem Außenring oder entspricht dem weiteren Lager. Die Spannvorrichtung umfasst zudem eine gemeinsame Welle, auf welcher das Lager und das weitere Lager angeordnet sind. Dabei laufen eine Kraftrichtung einer Vorspannkraft des ersten Lagerrings auf den zweiten Lagerring und eine weitere Kraftrichtung einer Vorspannkraft des Außenrings auf den Innenring zu der gemeinsamen Welle hin voneinander weg. Mit anderen Worten können die Lager eine sogenannte O-Anordnung beschreiben, durch die eine höhere Stützbreite, und somit verbesserte Stabilität der Welle gegen Torsionsbewegungen erreichbar sein kann.

Die Hülse und das Bauteil grenzen einen Raum zur Aufnahme eines Stellelements ein. Dabei ist ein Stellelement in den Raum eingeführt, welches dazu ausgebildet ist, eine axiale Position der Hülse gegenüber dem Bauteil zu fixieren. Somit kann nach einem Entspannen einer Hydraulik oder Mechanik, welche das axiale Verschieben der Hülse bewirkt, eine Fixierung der gewünschten Position möglich werden.

Der Raum ist hierbei ausgeführt als eine parallel zu der axialen Richtung verlaufende Bohrung, welche die Hülse vollständig durchdringt und sich in das Bauteil fortsetzt. Dabei umfasst das Stellelement eine Schraube. Somit kann ein mechanisches System geschaffen werden, durch dessen Betätigung eine gewünschte axiale Position, und somit eine gewünschte Vorspannung, vereinfacht einstellbar und zudem fixierbar ist.

Erfindungsgemäß ist der erste Lagerring ein Außenring und der zweite Lagerring ein Innenring. Das Bauteil umfasst ein ortsfestes Gehäuse. Damit kann die Innenwand der Hülse mit dem Außenring des Lagers in Anlage stehen. Anders ausgedrückt kann die Hülse demnach an einem ortsfesten Bauteil angeordnet sein, sodass der axial verschiebbare Lagerring im Betriebszustand ruht. Dies kann ein Verändern der Vorspannkraft sogar noch während einem Betrieb der Anlage erlauben.

Bei manchen Ausführungsbeispielen weist die Hülse einen sich radial erstreckenden Kragen auf, welcher dazu ausgebildet ist, den ersten Lagerring in axialer Richtung zu stützen. Dabei weist die Hülse eine axiale Abstufung auf, welche dazu ausgebildet ist, mit dem Bauteil ein Volumen wenigstens teilweise einzuschließen, sodass ein Aufbauen eines Druckes durch eine Flüssigkeit in dem Volumen ein Verschieben des ersten Lagerringes durch die Hülse gegenüber dem Bauteil in axialer Richtung bewirkt. Das Volumen kann somit durch Hülse und Bauteil begrenzt sein, aber dabei z. B. durch Passfugen oder einen Kanal zugänglich sein. Dies kann eine Möglichkeit eröffnen, einen hydraulischen Verschiebesitz in die Hülse zu integrieren.

Bei einigen Ausführungsbeispielen liegt die Hülse mit einer zu der axialen Richtung im Wesentlichen parallelen Kontaktfläche an dem ersten Lagerring an, und weist ferner eine der Kontaktfläche abgewandte konische Fläche auf, welche an einer Gegenfläche des Bauteils anliegt. Die konische Fläche kann einem Kegelstumpf entsprechen, der sich entlang der axialen Richtung verjüngt. Dadurch können die Vorspannkräfte eine Verschiebung des ersten Lagerrings in radialer Richtung zu dem zweiten Lagerring hin verursachen, was einen Kraftaufwand für eine vorgegebene Verminderung eines Spielraumes zwischen den Lagerringen erheblich mindern kann.

Bei manchen Ausführungsbeispielen weist das Lager einen Außendurchmesser von wenigstens 1500 Millimetern auf. Die Spannvorrichtung kann es dadurch ermöglichen, Setzungseffekte durch eine vereinfachte Einstellung der Vorspannung zu vermindern, oder auch eine erschwerte Handhabung des Lagers oder des Bauteils aufgrund von Masse oder Abmessungen bei dem Einstellen der Vorspannung zu vereinfachen oder zu umgehen.

Manche Ausführungsbeispiele beziehen sich auf eine Windkraftanlage mit einer zuvor genannten Spannvorrichtung. Es kann so möglich sein, durch ein Einstellen einer Vorspannung mit erhöhter Genauigkeit bei der Erstmontage eine Anzahl an später möglicherweise erforderlichen Wartungsprozessen zu verringern, welche z. B. bei Windkraftanlagen auf See mit erhöhtem Aufwand, Unkosten oder witterungsbedingten Problemen einhergehen können.

Gemäß einem weiteren Aspekt beziehen sich Ausführungsbeispiele auf ein Verfahren zum Vorspannen eines Lagers mittels der vorgenannten Spannvorrichtung. Das Verfahren umfasst ein Koppeln eines Bauteils mit einem ersten Lagerring des Lagers. Das Verfahren umfasst außerdem ein Abstützen des Bauteils mittels eines Stützelements gegen einen zweiten Lagerring des Lagers derart, dass ein geschlossener Kraftfluss von dem ersten Lagerring über das Bauteil und das Stützelement zu dem zweiten Lagerring entsteht. Das Verfahren umfasst zudem ein Verschieben einer Hülse, welche zwischen dem ersten Lagerring und dem Bauteil angeordnet ist, gegenüber dem Bauteil in axialer Richtung derart, dass eine Veränderung einer Vorspannkraft, welche in radiale Richtung und/oder in axiale Richtung zwischen dem ersten und einem zweiten Lagerring des Lagers übertragen wird, bewirkt wird. Eine Einstellung einer gewünschten Vorspannung kann so erheblich erleichtert oder hinsichtlich ihrer Genauigkeit verbessert werden. Korrekturen bei einer Einstellung der Vorspannung können dabei auch nach einer Endmontage einer Anlage mit der Spannvorrichtung vorgenommen werden.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben. Es zeigen im Einzelnen:
- Fig. 1: eine Querschnittsansicht einer Spannvorrichtung zum Vorspannen eines Lagers gemäß einem ersten Ausführungsbeispiel;
- Fig. 2: eine Querschnittsansicht einer Spannvorrichtung zum Vorspannen eines Lagers gemäß einem zweiten Ausführungsbeispiel; und
- Fig. 3: eine beispielhafte Anwendung für eine Spannvorrichtung zum Vorspannen eines Lagers bei einer Windkraftanlage;

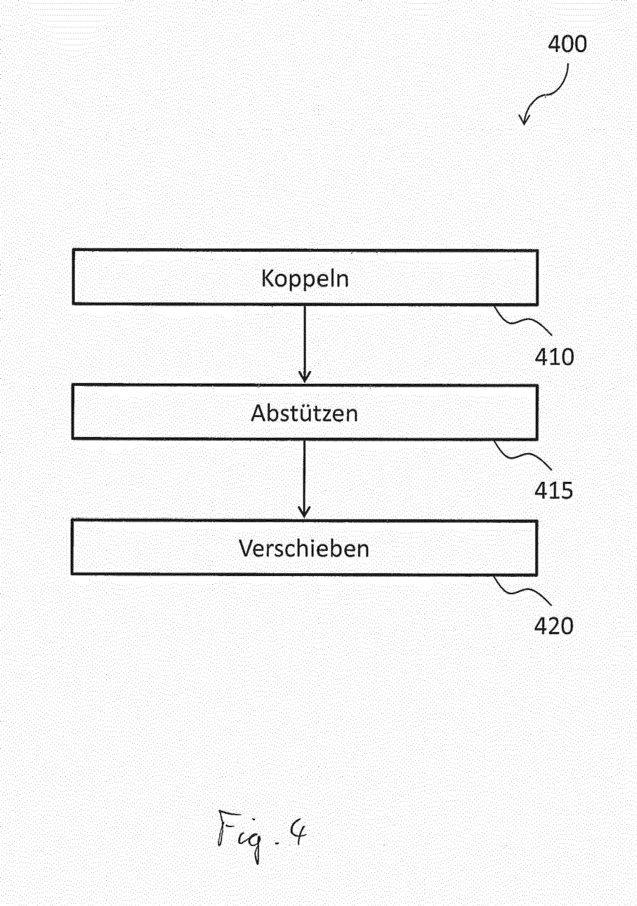

- Fig. 4: ein Flussdiagramm eines Verfahrens zum Vorspannen eines Lagers gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Ein Lagersystem kann beispielsweise ein Schrägkugellager (engl.: angular contact ball bearing, ACBB) oder Kegelrollenlager (engl.: tapered roll bearing, TRB) umfassen, die in O- oder X-Anordnung montiert sind. Die Bezeichnungen O- und X-Anordnung beziehen sich dabei auf den Verlauf von Kraftvektoren von Stütz- oder Vorspannkräften, die von einem Außenring über Wälzkörper auf einen Innenring übertragen werden. Bei einer X-Anordnung laufen zwei Kraftvektoren zweier unterschiedlicher Lager auf einer gemeinsamen Welle zu der Mittelachse hin aufeinander zu, und bei O-Anordnung entsprechend voneinander weg. Die Einstellung einer Vorspannung bei einem solchen Lagersystem kann ein komplexer Vorgang sein, und erhöhte Anforderungen an eine Genauigkeit mit sich bringen. Mit zunehmender Lagergröße kann die Einstellung dabei immer komplexer werden. Im Anwendungsbereich von Windhauptrotorlagerungen kann es notwendig sein, beispielsweise Kegelrollenlager mit Außendurchmessern von wenigstens drei Metern in O-Anordnung gezielt vorzuspannen. Aufgrund der Lagergröße können konventionelle Einstellungsmethoden, wie sie z. B. für hochvolumige Einbauten im Automotive-Bereich praktizierbar sind, beispielsweise über ein Reibmoment, möglicherweise nicht mehr angewandt werden. Aus technischer Sicht kann für derart große Lager eine Teilmontage erforderlich sein. Aufgrund der Teilmontage, welche einen Einsatz von Hilfshülsen umfassen kann, kann der Ist-Lagerabstand bestimmt werden. Toleranzkettenrechnungen können hingegen unter Umständen zu ungenaue Werte liefern. Mit Hilfe des Ist-Abstandes können Anbauteile für die richtige Einstellung der Vorspannung modifiziert werden, was jedoch unnötigen Aufwand mit sich bringen kann.

Montagen bzw. Teilmontagen können bei großen Lagern (z. B. ab 5 t Masse oder ab 1,5 m Außendurchmesser) beispielsweise mit einem erhöhten Zeitaufwand verbunden sein. Hierbei kann eine Erwärmung der Lagerringe oder eines Gehäuses entsprechend einem Wellen- oder Gehäusesitz vorgenommen werden. Ein Abkühlen auf Raumtemperatur kann bei sehr großen Lagern teilweise mehr als 24 Stunden beanspruchen. Wegen einem Einfluss von Temperaturausdehnungseffekten kann demnach ein Abwarten einer Abkühlung erforderlich sein.

Die Montage selbst kann zudem das Risiko bergen, die Wälzlager bzw. deren Komponenten zu beschädigen. Bei sehr großen Lagern können die Lagermassen mehr als 5t betragen, oder Gehäuse- und Wellenmassen mehr als 30t. Eine komplexe Handhabung der Teile bzw. eine Teilmontage kann demzufolge das Risiko von Lagerbeschädigungen erheblich erhöhen. Aufgrund der Unwegsamkeit innerhalb der Montage oder auch des Risikos, eine Einstellung falsch vorzunehmen, kann eine Verbesserung eines Montageprozesses oder einer reproduzierbaren Einstellgenauigkeit erstrebenswert sein. Methoden für eine Einstellung einer Vorspannung können sich auf eine axiale Positionierung der Lagerringe zueinander beziehen. Anders ausgedrückt können Relativbewegungen der Ringe zu Wellen und Gehäusen stattfinden, die aufgrund von Passungen teilweise nur sehr schwer und ungenau erfassbar oder einstellbar sein können.

Einige Ausführungsbeispiele zur Einstellung der Vorspannung beziehen sich darauf, dass mit Hilfe einer Hülse die Einstellung der Vorspannung erheblich erleichtert werden kann. Dies kann bei einem ersten Ausführungsbeispiel eine axiale Positionierung der Ringe umfassen, oder bei einem zweiten Ausführungsbeispiel bei unveränderter axialen Position der Ringe (bei der z. B. axiale Relativbewegungen entfallen können) eine radiale Aufweitung eines Innenrings oder eine radiale Komprimierung eines Außenrings umfassen. Die Vorspannung im Lagersystem kann somit ggf. leichter eingestellt werden. Das zweite Ausführungsbeispiel kann beispielsweise durch geeignete Passungen implementiert werden. Dabei können die Passungen variabel einstellbar sein.

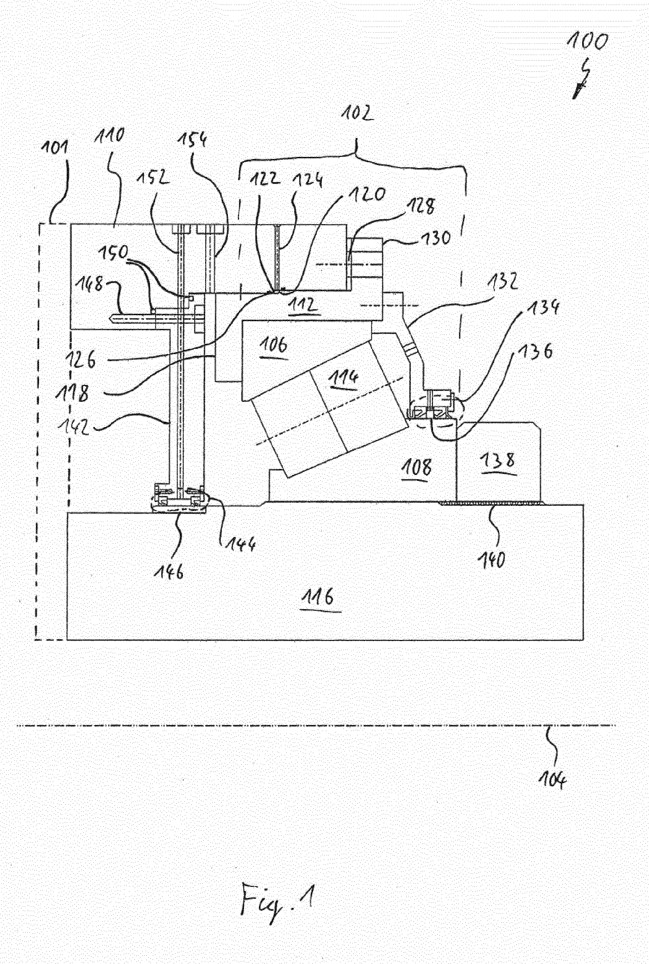

Fig. 1 zeigt eine Spannvorrichtung 100 zum Vorspannen eines Lagers 102 gemäß dem ersten Ausführungsbeispiel in Querschnittsansicht durch eine Ebene, in welcher die Mittel- oder Rotationsachse 104 liegt. Die Spannvorrichtung 100 umfasst das Lager 102, welches einen ersten Lagerring 106 und einen zweiten Lagerring 108 aufweist. Dabei ist das Lager 102 dazu ausgebildet, eine Vorspannkraft in radiale Richtung und/oder in axiale Richtung zwischen dem ersten Lagerring 106 und zweiten Lagerring 108 zu übertragen. Die Spannvorrichtung 100 umfasst außerdem ein mit dem ersten Lagerring 106 gekoppeltes Bauteil 110. Zusätzlich umfasst die Spannvorrichtung 100 ein Stützelement 101 zum Abstützen des Bauteils 110 gegen den zweiten Lagerring 108 derart, dass ein geschlossener Kraftfluss von dem ersten Lagerring 106 über das Bauteil 110 und das Stützelement 101 zu dem zweiten Lagerring 108 entsteht. Die Spannvorrichtung 100 umfasst weiterhin eine zwischen dem ersten Lagerring 106 und dem Bauteil 110 axial verschiebbar angeordnete Hülse 112. Die Hülse 112 ist dazu ausgebildet, bei einer axialen Verschiebung der Hülse 112 gegenüber dem Bauteil 110 eine Veränderung der Vorspannkraft zu bewirken.

Das Lager 102 kann ein kombiniert belastbares Lager, oder anders ausgedrückt z. B. ein Kegelrollenlager oder Schrägkugellager sein. Kombiniert belastbare Lager sind dazu ausgebildet, Bewegungen einer gelagerten Welle relativ zu einem Gehäuse in radiale Richtung und in zumindest eine axiale Richtung zu unterbinden. In Fig. 1 ist das Lager 102 als Kegelrollenlager mit kegelförmigen Wälzkörpern 114 ausgeführt.

Das Bauteil 110 kann ein ortsfestes Gehäuse 110 sein oder ein solches umfassen. Das ortsfeste Gehäuse 110 kann beispielsweise von einer Stützstruktur umfasst sein, welche in einer Gondel einer Windkraftanlage angeordnet ist. Entsprechend kann, wie Fig. 1 zeigt, der erste Lagerring 106 ein Außenring 106, und der zweite Lagerring 108 ein Innenring 108 sein. Bei anderen Ausführungsbeispielen kann das Bauteil 110 alternativ eine Welle umfassen. Dementsprechend kann der erste Lagerring 106 ein Innenring, und der zweite Lagerring 108 ein Außenring sein. Im vorliegenden Ausführungsbeispiel ist der Innenring 108, beispielsweise mittels einer Presspassung, mit einer Welle 116 unmittelbar verbunden. Mit anderen Worten kann der Innenring 108 umlaufen.

Das Stützbauteil 101 kann einteilig oder mehrteilig ausgebildet sein. Das Stützbauteil 101 ist zudem dazu ausgebildet, beispielsweise eine axiale Bewegung des Bauteils 110 in Richtung des Stützbauteils 101 zu begrenzen. Weiterhin kann das Stützbauteil 101 auch derart mit dem zweiten Lagerring 108 verbunden sein, dass eine axiale Relativbewegung zwischen dem Bauteil 110 und dem zweiten Lagerring 108 begrenzt oder sogar verhindert wird. Dabei kann der geschlossene Kraftfluss von dem Stützbauteil 101 zu dem zweiten Lagerring 108 unmittelbar oder mittelbar, z. B. über die Welle 116, erfolgen. Bei einem Ausführungsbeispiel, welches im weiteren Verlauf noch näher beschrieben ist, ist das Stützbauteil 101 ein weiteres Lager. Das weitere Lager kann z. B. ein Kegelrollenlager sein.

Aufgrund des umlaufenden Innenrings 108 kann bei sehr großen Lagern, beispielsweise ab wenigstens 1500 mm Außenringdurchmesser, ein strammer Innenringsitz gewählt werden (z.B. eine S-Passung). Aufgrund des vergleichsweise loseren Sitzes des Außenrings 106 kann es sinnvoll sein, zur Einstellung der Vorspannung die Hülse 112 in Kombination mit dem Außenring 106 auszuführen. Der Schiebesitz zwischen Gehäuse 110 und Hülse 112 kann hierbei mit einer Übergangspassung versehen werden, oder anders ausgedrückt, einer verstellbaren Passung. Der Sitz zwischen Außenring 106 und Hülse 112 kann verglichen mit dem Sitz zwischen Gehäuse 110 und Hülse 112 eine strammere Passung aufweisen. Die Hülse 112 weist einen sich radial erstreckenden Kragen 118 auf, welcher dazu ausgebildet ist, den Außenring 106 in axialer Richtung zu stützen. Die Hülse 112 weist zudem eine axiale Abstufung 120 auf, welche dazu ausgebildet ist, mit dem Bauteil 110 ein Volumen 122 wenigstens teilweise einzuschließen, sodass ein Aufbauen eines Druckes durch eine Flüssigkeit in dem Volumen 122 ein Verschieben des Außenringes 106 durch die Hülse 112 gegenüber dem Bauteil 110 in axialer Richtung bewirkt.

Die Flüssigkeit kann beispielsweise ein Schmiermittel sein, z. B. Fett oder Öl. Zum Einbringen der Flüssigkeit in das Volumen 122 verfügt das Gehäuse 110 über einen Kanal 124, der von radial außen durch das Gehäuse 110 zu dem Volumen 122 hin verläuft. Somit kann es möglich sein, eine Öldruckmontage der Hülse 112 mit dem Außenring 106 in einer gewünschten Axialposition vorzunehmen. Nach einem Einführen von Öl (oder einem anderen Schmiermittel) in das Volumen 122 kann ein Erhöhen eines Druckes des Öls bewirken, dass dieses in eine Passfuge an der Kontaktfläche zwischen Hülse 112 und Gehäuse 110 vordringt, und dort einen dünnen Film bildet. Dies kann eine Reibung zwischen Hülse 112 und Gehäuse 110 erheblich vermindern, und so möglicherweise eine leichtere Verschiebbarkeit ohne Haft-Gleiteffekte (engl.: stick-slip Effekte) bewirken.

Das Volumen 122 wird radial innen von einer zu der Mittelachse 104 parallelen Fläche der Hülse 112, und radial außen von einer zu der Mittelachse 104 parallelen Fläche des Gehäuses 110, in welcher der Kanal 124 mündet, begrenzt. Die axiale Abstufung 120 der Hülse 112 und eine weitere axiale Abstufung 126 des Gehäuses 110 bilden zwei einander gegenüberliegende radial verlaufende Flächen, die das Volumen 122 in axialer Richtung begrenzen. Der Druck des Öls in dem Volumen 122 kann nun ferner bewirken, dass auf diese beiden radial verlaufenden Flächen voneinander weg gerichtete Kräfte ausgeübt werden, die ein Verschieben der Hülse 112 entlang der axialen Richtung (in Fig. 1 nach rechts) zur Folge haben können. Dabei wird der Außenring 106 von dem Kragen 118 der Hülse 112 mitgeführt, und gegen die Wälzkörper 114 gedrückt, die die Andruckkraft auf den Innenring 108 weiter übertragen.

Bei der Einstellung der Vorspannung kann eine Definition eines "Nullpunktes" hilfreich sein. Als Nullpunkt kann hier beispielsweise der Punkt beschrieben werden, der eine Einbausituation beschreibt, bei der ein Spiel der Lagerringe 106; 108 oder auch eine Vorspannung im Wesentlichen gleich Null sind. Der Nullpunkt kann durch eine hydraulische axiale Positionierung des Außenringes 106 gefunden werden. Beispielsweise kann bei Ringen mit 2 m Außendurchmesser durch die Öldruckmontage eine axiale Ringverschiebung ohne Haft-Gleiteffekte erheblich leichter fallen. Der Nullpunkt kann erreicht sein, sobald alle Wälzkörper 114 des Lagers 102 den Innenring 108 und den Außenring 106 gerade eben berühren. Ist der Nullpunkt erreicht, kann sich aufgrund der Tatsache, dass dabei alle Wälzkörper 114 im Kontakt sowohl mit dem Innenring 108 als auch dem Außenring 106 sind, eine Steifigkeitserhöhung des Lagers 102 ergeben. Die Steifigkeitszunahme kann beispielsweise durch einen Druckanstieg im Hydrauliksystem erkennbar werden. Durch den Druckanstieg kann somit gemäß einem Ausführungsbeispiel der Nullpunkt definiert werden. Eine solche Nullpunkt-Definition kann bei konventionellen Vorspannungseinstellungen erheblich schwieriger sein. Durch die Abstufung 120 der Hülse 112 im Gehäuse 110 kann z. B. eine Integration eines axialen Zylinders möglich sein, der zur Nullpunktfindung verwendet werden kann. Verschiebungen eines Lagerrings über den Nullpunkt hinaus können in einem Bereich unterhalb von 1 mm liegen, beispielsweise bei ca. 10 bis 100 µm.

Die Hülse 112 bildet anders ausgedrückt im vorliegenden Ausführungsbeispiel einen hydraulischen Axialhülsenzylinder, der für eine Öldruckmontage verwendet werden kann. Somit kann über den hydraulischen Druck direkt die Vorspannung im Lagersystem eingestellt werden. Alternativ kann auch eine externe Hydraulik hierfür vorhanden sein. Durch entsprechende Sicherungen, z.B. Schrauben oder Flanschen, kann eine Fixierung der Vorspannung bei einem Entspannen des Hydrauliksystems ermöglicht werden. Dabei grenzen die Hülse 112 und das Bauteil 110 einen Raum 128 zur Aufnahme eines Stellelements ein. Ein Stellelement, welches dazu ausgebildet ist, eine axiale Position der Hülse 112 gegenüber dem Bauteil 110 zu fixieren, kann in den Raum 128 eingeführt werden. Der Raum 128 ist an einem radialen Fortsatz 130 der Hülse 112 angeordnet, welcher das Gehäuse 110 in radialer Richtung nach außen überlappt. Der Raum 128 ist. als Bohrloch zur Aufnahme eines Stellelementes in Form einer Schraube ausgebildet. Zusätzlich kann der Raum 128 in Form eines Spaltes ausgebildet sein, der axial von dem Fortsatz 130 und dem Gehäuse 110 begrenzt wird, und in Umfangsrichtung umläuft. Entsprechend kann das Stellelement eine Kombination aus einem Flansch oder Distanzstück zum Einbringen in den Spalt und aus der Schraube sein.

Zusätzlich zu einer hydraulischen Einstellung der Vorspannung kann über eine entsprechende Gestaltung der Hülse 112 eine mechanische Axialverschiebung bewerkstelligt werden. Optional kann die Verwendung der Öldruckmontage die mechanische Einstellung unterstützen. Ein mechanisches System zur Einstellung kann beispielsweise durch eine Stellschraube als Stellelement realisiert werden, und der Raum 128 kann als Bohrloch mit einem Innengewinde ausgebildet sein, welches den Fortsatz 130 vollständig, und wenigstens teilweise das Gehäuse 110 in fortgesetzter Richtung durchdringt. Ein Drehen der Stellschraube kann so ein Verschieben der Hülse 112 gegenüber dem Gehäuse 110 bewirken oder unterstützen. Des Weiteren können alternativ oder ergänzend elektrische oder elektromechanische Systeme für ein axiales Verschieben implementiert werden.

An dem Fortsatz 130 der Hülse 112 ist weiterhin ein Dichtungsring 132 befestigt, der radial nach innen eingezogen ist, und eine Mehrzahl an Lippendichtungen 134 aufweist. Die Mehrzahl an Lippendichtungen 134 dichten an einer Lauffläche 136 des Innenrings 108 ab. Dabei weisen die Dichtlippen einiger Lippendichtungen der Mehrzahl an Lippendichtungen 134 zu den Wälzkörpern 114 des Lagers 102 hin, und eine Dichtlippe einer anderen Lippendichtung der Mehrzahl an Lippendichtungen 134 von den Wälzkörpern 114 weg. Der Innenring 108 kann in seiner axialen Position durch ein auf der Welle 116 befestigtes Sperrelement 138, z. B. einen Flansch oder eine Kontermutter gegen Verrutschen abgesichert sein. Die Welle 116 kann hierzu ein Gewinde oder eine Profilierung 140 aufweisen, um ein Verrutschen des Sperrelements 138 zu verhindern. Das Gehäuse 110 kann zudem ein Trägerelement 142 umfassen, welches eine weitere Mehrzahl an Lippendichtungen 144 trägt, die an einer Gleitfläche 146 der Welle 116 abdichten. Die Gleitfläche 146 kann aus einem anderen Material als die Welle 116 gefertigt sein. Die Lippen der weiteren Mehrzahl an Lippendichtungen 144 können dabei in axialer Richtung zu dem Lager 102 hin ausgerichtet sein. Optional kann das Gehäuse 110 außerdem eine Bohrung 148 zum Befestigen des Trägerelements 142, sowie mehrere O-Ringe 150, beispielsweise zum Abdichten gegen Leckagen, aufweisen. Das Gehäuse 110 kann optional weiterhin einen ersten Leckagekanal 152 aufweisen, der zwischen zwei Lippendichtungen der weiteren Mehrzahl an Lippendichtungen 144 mündet, sowie einen zweiten Leckagekanal 154, der zwischen dem Lager 102 und dem Trägerelement 142 mündet. Die Leckagekanäle 152; 154 können einem Abführen von möglicherweise eingedrungener Flüssigkeit, z. B. Wasser, oder Verunreinigungen dienen, oder auch für ein Einbringen von Sensoren zum Feststellen von Leckage oder Verunreinigungen, oder einer Messung von vorhandenem Schmiermittel für das Lager 102.

Die beschriebenen Ausführungsbeispiele kann sowohl für eine Erstmontage (eventuell als vormontierte Lagereinheit) als auch zur Nachstellung der Vorspannung im Betrieb herangezogen werden. Ein Nachstellen im Betrieb kann z.B. Setzungen, Verschleiß und Kriechen ausgleichen. Bei einer konventionellen Einstellung ohne Nachjustiermöglichkeit kann es erforderlich sein, Abschätzungen für Setzungen etc. zu machen, und diese in der ursprünglichen Vorspannung zu berücksichtigen. Eine auf herkömmliche Art eingestellte Anlage kann demnach eine höhere als erforderliche Vorspannung aufweisen, damit auch nach größeren Zeiträumen, beispielsweise bis zu 20 Jahren oder mehr, die Vorspannung ein Minimum nicht unterschreitet. Eine höhere als erforderliche Vorspannung kann sich jedoch abträglich auf die Leistung eines Lagers auswirken.

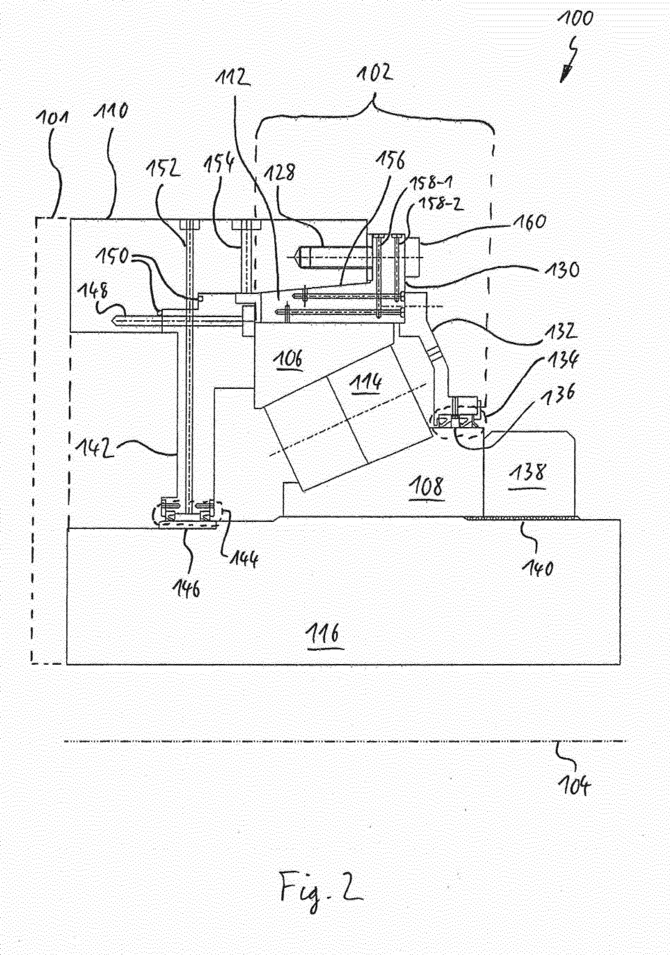

Fig. 2 beschreibt ein zweites Ausführungsbeispiel der Spannvorrichtung 100 zum Vorspannen eines Lagers 102 in Querschnittsansicht durch eine Ebene, in welcher die Rotationsachse 104 liegt. Gleiche oder vergleichbare Komponenten, die eine Entsprechung in Fig. 1 besitzen, tragen hierin dieselben Bezugszeichen, und sind nachfolgend nicht nochmals erklärt. Es wird vielmehr lediglich auf die Unterschiede eingegangen.

Die Hülse 112 liegt bei dem zweiten Ausführungsbeispiel mit einer zu der axialen Richtung im Wesentlichen parallelen Kontaktfläche an dem Innenring 108 an. Die Kontaktfläche folgt dabei mit anderen Worten dem Verlauf eines Zylinders, dessen Mittelachse parallel oder gleich zu der Drehachse 104 der Welle 116 ist. Ferner weist die Hülse 112 eine der Kontaktfläche abgewandte konische Fläche 156 auf, welche an einer Gegenfläche des Bauteils 110 anliegt. Die konische Fläche 156 folgt dem Verlauf eines Konus, dessen Mittelachse parallel oder gleich zu der Drehachse 104 der Welle 116 ist, und verjüngt sich entlang der axialen Richtung in Fig. 2 nach links. Das Bauteil 110 oder Gehäuse 110 kann eine konische Gegenfläche aufweisen, welche in gleichem Maße abgeschrägt ist wie die konische Fläche 156, oder kann an eine zusätzliche Manschette angebunden sein, welche die besagte Gegenfläche aufweist.

Der Außenring 106 kann mit dem Gehäuse 110, oder genauer gesagt, dem Trägerelement 142 axial in Anlage stehen, wodurch ein axiales Verschieben des Außenrings 106 verhindert werden kann. Die Vorspannung des Lagers 102 kann bei axial fixiertem Außenring 106 (oder auch Innenring 108) durch eine Anpassung der Passung zwischen Gehäuse 110 und Außenring 106 (oder auch alternativ zwischen Welle 116 und Innenring 108) über die Hülse 112 erfolgen. Fertigungstechnisch könnte es ebenso möglich sein, den Konus zwischen Hülse 112 und Außenring 106 oder Innenring 108 zu realisieren. Bei einer Lagerherstellung kann eine hierfür geforderte Präzision einfach erreicht werden. Weiterhin kann eine Gehäusebearbeitung durch einen zylindrischen Sitz erheblich vereinfacht werden.

Durch Schmiermittelkanäle 158-1; 158-2 wird ein Schmiermittel, z. B. Öl, durch Einpressen auf die Kontaktfläche zwischen Außenring 106 und Hülse 112 sowie auf die konische Fläche 156 zwischen Hülse 112 und Gehäuse 110 aufgebracht. Dadurch kann eine Reibung vermindert werden, und die Hülse 112 relativ zu Gehäuse 110 und Außenring 106 axial bewegt werden. Bei Bewegung der Hülse 112 auf das Trägerelement 142 zu kann ein Verschieben, oder mit anderen Worten, eine Kompression des Außenrings 106 in radiale Richtung oder sogar ausschließlich in radiale Richtung nach innen erfolgen. Dadurch kann eine Spannkraft erhöht werden.

Das Verschieben kann durch ein in Fig. 2 als Stellschraube 160 ausgeführtes Stellelement 160 bewirkt werden, welches in den Raum 128 eingeführt ist. Der Raum 128 kann dementsprechend ein Hohlgewinde sein. Das Hohlgewinde verläuft parallel zu der Mittelachse 104, durchdringt die Hülse 112 vollständig, und setzt sich in das Gehäuse 110 als Sackbohrung mit Gewinde fort. Die Stellschraube 160 kann zudem einer Fixierung der Hülse 112 in ihrer axialen Position während oder nach einem Ablassen des Schmiermittels aus den entsprechenden Passfugen dienen.

Aufgrund der möglicherweise hohen Überdeckungen am Innenring 108 und gegenüber der bauteilseitigen höheren Wellen-Innenring-Belastung kann eine Einstellung über den Außenring 106 wünschenswert sein. Diese kann bewirken, das keine Zugspannungen (wie bei einem Innenring 108 durch dessen Aufweitung durch eine zwischen Innenring 108 und Welle 116 befindliche, konische Hülse 112) im Ring appliziert werden, die möglicherweise einen verkürzenden Effekt auf die Lagerlebensdauer haben könnten. Eine Komprimierung des Außenrings 106 kann dagegen zu Kompressionsspannungen im Außenring 106 führen, die ggf. lebensdauerneutral oder sogar lebensdauerverlängernd wirken können.

Die Nullpunktposition kann als Ausgangspunkt für eine radiale Vorspannungseinstellung gewählt werden. Dabei erfolgt die Nullpunktfindung beispielsweise analog zu dem ersten Ausführungsbeispiel. Die konische Hülse 112 am Außenring 106 kann durch eine axiale Positionierung den Lagersitz verstärken oder reduzieren und somit eine Einstellung der Vorspannung ermöglichen. Die axiale Verschiebung kann analog zu dem ersten Ausführungsbeispiel durch hydraulische, oder alternativ oder zusätzlich mechanische, elektrische oder elektromechanische Systeme erfolgen. Dies kann auch ein hydraulisches Anheben umfassen, wodurch Haft-Gleiteffekte vermieden werden können. Eine mechanische Sicherung der Vorspannkraft kann dabei erfolgen.

Die Vorspannung kann beispielsweise eine Verschiebung der Lagerringe zueinander im Bereich von 0,1 mm bis 1 mm zur Folge haben. Für eine beispielhafte Kegelrollenlager-Anordnung mit 18°-Druckwinkeln ergibt sich für eine axiale Vorspannung von 500 µm druckwinkelbedingt ein benötigter strammerer Außenring-Sitz von ca. 320 µm, der beispielsweise durch einen Hülsenkegelwinkel von 1:30 aufgebracht werden kann. Eine Druckbelastung über einen Umfang des Außenrings 106 (engl.: hoop stress) kann dabei bis zu 5 MPa betragen.

Um eine Systemvorspannung von 1000 kN aufzubringen, können bei dem ersten Ausführungsbeispiel unter Umständen mechanische oder hydraulisch erzeugte Kräfte von wenigstens 1000 kN erforderlich sein. Um eine Systemvorspannung von 1000 kN aufzubringen, kann bei dem zweiten Ausführungsbeispiel mit einer konischen Hülse 112, die eine Steigung des Konus von 1:30 aufweist, unter Umständen ein Verschiebeweg von ca. 10mm (starr) erforderlich sein. Durch den Kegelwinkel 1:30 kann sich eine Kraftreduzierung um einen Faktor von beispielsweise bis zu 10 ergeben, oder, mit anderen Worten, ein verbleibender Kraftaufwand von lediglich ca. 100 kN.

Bei dem zweiten Ausführungsbeispiel kann eine Lagerringaxialverschiebung, welche bei einem Innenring-Sitz zusätzlich problematisch sein könnte, vermieden werden. Eine Einstellung der Vorspannung durch Ausübung einer radialen Kraft kann mit entsprechender kegeliger Hülse die benötigte Vorspannkraft ca. um einen Faktor 10 reduzieren. Produktions- oder Handhabungsaufwand können dabei vereinfacht werden. Eine reduzierte Vorspannkraft wiederum kann eine einfachere Integration eines hydraulischen Zylinders in die Hülse ermöglichen. Beispielsweise entspricht ein Hülsenkegel von 1:30 einem Kegelwinkel von ca. 2°. Somit kann durch Selbsthemmung verhindert werden, das der Kegel sich von alleine wieder heraus schiebt. Hierbei kann eine vereinfacht ausgeführte mechanische Sicherung ausreichend sein, und die Möglichkeit bestehen, eine vereinfachte Implementierung der mechanischen Sicherung vorzunehmen. Zudem kann ein wegabhängiges Einstellen wegen großer Verschiebewege (5 bis 10mm) einfacher umsetzbar sein.

Das beschriebene erste und zweite Ausführungsbeispiel, sowie weitere Ausführungsbeispiele können die Möglichkeit einer einfachen Integration von hydraulischen, elektrischen oder mechanischen Verschiebesitzen in die Hülse 112 eröffnen. Auch kann eine Vorspannsicherung oder eine Öldruckmontagehilfe in die Hülse 112 integrierbar sein. Ferner kann bei Ausführungsbeispielen eine Nachstellung im Betrieb auf einfachere Weise möglich sein, da der Außenring 106 über eine bessere Zugänglichkeit verfügt als der Innenring 108. Ein Lösen einer Rotor-Lagerung für die Nachstellung, beispielsweise bei Anwendung im Zusammenhang mit einer Windkraftanlage oder eine (teilweise) Demontage des Antriebsstrangs kann dabei womöglich entfallen. Kommen Anordnungen aus mehreren Lagern zum Einsatz, kann dabei ggf. eine Aufteilung der Vorspannungseinstellung auf eines oder auch auf wenigstens zwei Lager möglich sein. Ein Einfluss auf Rundumbelastungen kann dabei vernachlässigbar sein.

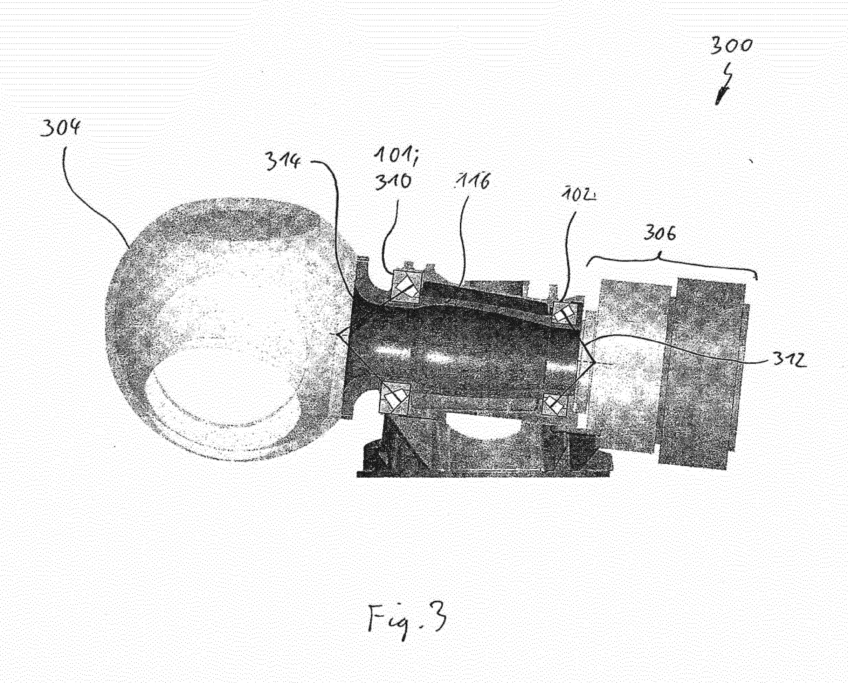

Fig. 3 zeigt ein mögliches Anwendungsgebiet für eine Spannvorrichtung zum Vorspannen eines Lagers bei einer Windkraftanlage. Bei einigen Ausführungsbeispielen kann die Windkraftanlage somit die Spannvorrichtung umfassen. Ein Antriebsstrang 300 der Windkraftanlage umfasst eine Welle 116, an deren Ende eine Nabe 304 angebracht ist, die dazu ausgebildet ist, eine Mehrzahl an Turbinenblättern zu tragen. An einem Gegenende der Welle 116 sind weitere Anbauteile 306 befindlich, die beispielsweise ein Getriebe, eine Bremse, einen Generator zur Stromerzeugung oder ein stabilisierendes Gegengewicht zu einer Turbine oder einem Rotor der Windkraftanlage umfassen können.

Die Spannvorrichtung kann an ein Lager 102 und an ein weiteres Lager 310 mit einem Innenring und einem Außenring angebunden sein, oder diese umfassen. Das weitere Lager 310 kann z. B. baugleich mit dem Lager, als Schrägkugel- oder Kegelrollenlager, ausgeführt sein. Dabei ist die Welle 116 eine gemeinsame Welle 116, auf welcher das Lager 102 und das weitere Lager 310 angeordnet sind. Eine Kraftrichtung 312 einer Vorspannkraft des ersten Lagerrings auf den zweiten Lagerring und eine weitere Kraftrichtung 314 einer Vorspannkraft des Außenrings auf den Innenring zu der gemeinsamen Welle hin laufen dabei voneinander weg laufen. Mit anderen Worten können das Lager 102 und das weitere Lager 310 in O-Anordnung montiert sein. Dies kann eine höhere Stützkraft der Welle 116 bewirken, da die beiden Schnittpunkte der Kraftlinien weiter voneinander weg liegen als bei einer X-Anordnung, bei der die Kraftlinien aufeinander zu laufen.

Das weitere Lager 310 kann, wie bereits im Zusammenhang mit Fig. 1 erläutert, dem Stützelement 101 entsprechen, oder von dem Stützelement 101 umfasst sein. Die Positionierungen der Lager 102 und 310 sind hierbei jedoch nicht auf die in Fig. 3 beispielhaft gezeigte Anordnung eingeschränkt, sondern kann auch umgekehrt erfolgen. Mit anderen Worten kann die in Fign. 1 und 2 beschriebene Spannvorrichtung beispielsweise das der Nabe 304 zugewandte Lager, oder das der Nabe 304 abgewandte Lager umfassen. Das in Fig. 3 der Nabe 304 abgewandte Lager 102 kann möglicherweise durch seine Positionierung, die einem Innenraum einer Gondel der Windkraftanlage zugewandt ist, einen leichteren Zugang bieten. Ein Vorspannen des Lagers 102 mittels der das Lager 102 umfassenden Spannvorrichtung könnte somit vereinfacht werden.

Ein Verschieben der Hülse 112 in axialer Richtung (vgl. Fig. 1 und 2) kann ein Verschieben des Außenrings des Lagers 102 und des Außenrings des Lagers 310 zueinander hin oder voneinander weg bewirken. Anders ausgedrückt kann es so ermöglicht werden, das Lager 102 und das weitere Lager 310 mittels einer gemeinsamen Spannvorrichtung, die lediglich eines der Lager 102 oder 310 umfasst, vorzuspannen. Der geschlossene Kraftfluss kann so beispielsweise von dem Außenring des Lagers 102 über das Bauteil, den Außenring des Lagers 310, den Innenring des Lagers 310 und die Welle 116 zu dem Innenring des Lagers 102, auch mittelbar über jeweilige Wälzkörper, wirken. Die Vorspannkraft oder eine Veränderung der Vorspannkraft mittels der gemeinsamen Spannvorrichtung kann sich so zwischen den Lagerringen des Lagers 102 und den Lagerringen des Lagers 310 verteilen. Bei einem weiteren Ausführungsbeispiel können sogar das Lager 102 von der Spannvorrichtung, und das weitere Lager 310 von einer weiteren Spannvorrichtung umfasst sein.

Ein beispielsweise in die Gondel der Windkraftanlage integriertes Gehäuse 316 trägt die jeweiligen Außenringe der Lager 102; 310. Die zuvor beschriebenen Hülsen 112 gemäß Ausführungsbeispielen (vgl. Fign. 1 und 2) können beispielsweise zwischen den Außenringen und dem Gehäuse 316 eingesetzt werden. Das Lager 102 und/oder das weitere Lager 310 können dabei einen Außendurchmesser von wenigstens 1500 mm aufweisen. Bei anderen Ausführungsbeispielen kann der Außendurchmesser des Lagers 102 oder des weiteren Lagers 310 auch wenigstens 1000 mm oder wenigstens 2000 mm betragen.

Gemäß einem weiteren Aspekt beziehen sich Ausführungsbeispiele auf ein Verfahren 400 zum Vorspannen eines Lagers. Das Verfahren 400 umfasst ein Koppeln 410 eines Bauteils mit einem ersten Lagerring des Lagers. Das Verfahren 400 umfasst außerdem ein Abstützen 415 des Bauteils mittels eines Stützelements gegen einen zweiten Lagerring des Lagers derart, dass ein geschlossener Kraftfluss von dem ersten Lagerring über das Bauteil und das Stützelement zu dem zweiten Lagerring entsteht. Das Verfahren 400 umfasst zudem ein Verschieben 420 einer Hülse, welche zwischen dem ersten Lagerring und dem Bauteil angeordnet ist, gegenüber dem Bauteil in axialer Richtung derart, dass eine Veränderung einer Vorspannkraft, welche in radiale Richtung und/oder in axiale Richtung zwischen dem ersten und einem zweiten Lagerring des Lagers übertragen wird, bewirkt wird.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels im Schutzbereich der vorliegenden Ansprüche in ihren verschiedenen Ausgestaltungen von Bedeutung sein und implementiert werden.

### Bezugszeichenliste

- 100: Spannvorrichtung
- 101: Stützelement
- 102: Lager
- 104: Rotationsachse/Mittelachse
- 106: Erster Lagerring
- 108: Zweiter Lagerring
- 110: Bauteil
- 112: Hülse
- 114: Wälzkörper
- 116: Welle
- 118: Kragen
- 120: Axiale Abstufung
- 122: Volumen
- 124: Kanal
- 126: Weitere axiale Abstufung
- 128: Raum
- 130: Fortsatz
- 132: Dichtungsring
- 134: Mehrzahl an Lippendichtungen
- 136: Lauffläche
- 138: Sperrelement
- 140: Gewinde/Profilierung
- 142: Trägerelement
- 144: Weitere Mehrzahl an Lippendichtungen
- 146: Gleitfläche
- 148: Bohrung
- 150: O-Ringe
- 152: Erster Leckagekanal
- 154: Zweiter Leckagekanal
- 156: konische Fläche
- 158-1; 158-2: Schmiermittelkanäle
- 160: Stellelement
- 300: Antriebsstrang
- 304: Nabe
- 306: Weitere Anbauteile
- 310: Weiteres Lager
- 312: Kraftrichtung
- 314: Weitere Kraftrichtung
- 400: Verfahren
- 410: Koppeln
- 420: Verschieben

## Patentansprüche

1. Spannvorrichtung (100) zum Vorspannen eines Lagers (102), umfassend:
das Lager (102) mit einem ersten Lagerring (106) und einen zweiten Lagerring (108), wobei das Lager (102) dazu ausgebildet ist, eine Vorspannkraft in radiale Richtung und/oder in axiale Richtung zwischen dem ersten Lagerring (106) und dem zweiten Lagerring (108) zu übertragen;
ein mit dem ersten Lagerring (106) gekoppeltes Bauteil (110);
ein Stützelement (101) zum Abstützen des Bauteils (110) gegen den zweiten Lagerring (108) derart, dass ein geschlossener Kraftfluss von dem ersten Lagerring (106) über das Bauteil (110) und das Stützelement (101) zu dem zweiten Lagerring (108) entsteht; und
eine zwischen dem ersten Lagerring (106) und dem Bauteil (110) axial verschiebbar angeordnete Hülse (112), die ausgebildet ist, um bei einer axialen Verschiebung der Hülse (112) gegenüber dem Bauteil (110) eine Veränderung der Vorspannkraft zu bewirken, wobei der erste Lagerring (106) ein Außenring und der zweite Lagerring (108) ein Innenring ist, und wobei das Bauteil (110) ein ortsfestes Gehäuse umfasst,
wobei das Stützelement (101) ein weiteres Lager (310) mit einem Innenring und einem Außenring umfasst oder dem weiteren Lager (310) entspricht, und wobei die Spannvorrichtung weiterhin eine gemeinsame Welle (116), auf welcher das Lager (102) und das weitere Lager (310) angeordnet sind, umfasst, wobei eine Kraftrichtung (312) einer Vorspannkraft des ersten Lagerrings auf den zweiten Lagerring und eine weitere Kraftrichtung (314) einer Vorspannkraft des Außenrings auf den Innenring zu der gemeinsamen Welle (116) hin voneinander weg laufen und dass die Hülse (112) und das Bauteil (110) einen Raum (128) zur Aufnahme eines Stellelements (160) eingrenzen, und wobei das Stellelement (160) in den Raum (128) eingeführt ist,
welches dazu ausgebildet ist, eine axiale Position der Hülse (112) gegenüber dem Bauteil (110) zu fixieren,
**dadurch gekennzeichnet,**
**dass** der Raum (128) als eine parallel zu der axialen Richtung verlaufende Bohrung ausgebildet ist, welche die Hülse (112) vollständig durchdringt und sich in das Bauteil (110) fortsetzt, und wobei das Stellelement (160) eine Schraube (160) umfasst.

2. Spannvorrichtung (100) gemäß Anspruch 1, wobei der Raum (128) zusätzlich einen Spalt aufweist, der axial von der Hülse (112) und dem Gehäuse (110) begrenzt wird, und in Umfangsrichtung umläuft, und wobei das Stellelement eine Kombination aus der Schraube (160) und aus einem Flansch oder Distanzstück zum Einbringen in den Spalt umfasst.

3. Spannvorrichtung (100) gemäß einem der vorangegangenen Ansprüche, wobei die Hülse (112) einen sich radial erstreckenden Kragen (118) aufweist, welcher dazu ausgebildet ist, den ersten Lagerring (106) in axialer Richtung zu stützen, und wobei die Hülse (112) eine axiale Abstufung (120) aufweist, welche dazu ausgebildet ist, mit dem Bauteil (110) ein Volumen (122) wenigstens teilweise einzuschließen, sodass ein Aufbauen eines Druckes durch eine Flüssigkeit in dem Volumen (122) ein Verschieben des ersten Lagerringes (106) durch die Hülse (112) gegenüber dem Bauteil (110) in axialer Richtung bewirkt.

4. Spannvorrichtung (100) gemäß einem der Ansprüche 1 oder 2, wobei die Hülse (112) mit einer zu der axialen Richtung im Wesentlichen parallelen Kontaktfläche an dem ersten Lagerring (106) anliegt, und ferner eine der Kontaktfläche abgewandte konische Fläche (156) aufweist, welche an einer Gegenfläche des Bauteils (110) anliegt.

5. Spannvorrichtung (100) gemäß einem der vorangegangenen Ansprüche, wobei das Lager (102) einen Außendurchmesser von wenigstens 1500 Millimetern aufweist.

6. Windkraftanlage mit einer Spannvorrichtung (100) gemäß einem der vorangegangenen Ansprüche.

7. Verfahren (400) zum Vorspannen eines Lagers mittels einer Spannvorrichtung (100) nach Anspruch 1, umfassend:
ein Koppeln (410) eines Bauteils mit einem ersten Lagerring des Lagers;
ein Abstützen (415) des Bauteils mittels eines Stützelements gegen einen zweiten Lagerring des Lagers derart, dass ein geschlossener Kraftfluss von dem ersten Lagerring über das Bauteil und das Stützelement zu dem zweiten Lagerring entsteht; und
ein Verschieben (420) einer Hülse, welche zwischen dem ersten Lagerring und dem Bauteil angeordnet ist, gegenüber dem Bauteil in axialer Richtung derart, dass eine Veränderung einer Vorspannkraft, welche in radiale Richtung und/oder in axiale Richtung zwischen dem ersten und dem zweiten Lagerring des Lagers übertragen wird, bewirkt wird.

## Claims

1. Tensioning device (100) for pretensioning a bearing (102), comprising
the bearing (102) having a first bearing ring (106) and a second bearing ring (108), wherein the bearing (102) is designed to transmit a pretensioning force in the radial direction and/or in the axial direction between the first bearing ring (106) and the second bearing ring (108) ;
a component (110) coupled to the first bearing ring (106) ;
a supporting element (101) for supporting the component (110) with respect to the second bearing ring (108) in such a way that a closed force flow occurs from the first bearing ring (106) via the component (110) and the supporting element (101) to the second bearing ring (108); and
a sleeve (112) which is arranged so as to be axially displaceable between the first bearing ring (106) and the component (110) and which is designed to bring about a change in the pretensioning force upon an axial displacement of the sleeve (112) with respect to the component (110),
wherein the first bearing ring (106) is an outer ring and the second bearing ring (108) is an inner ring, and wherein the component (110) comprises a positionally fixed housing,
wherein the supporting element (101) comprises a further bearing (310) having an inner ring and an outer ring or corresponds to the further bearing (310), and wherein the tensioning device furthermore comprises a common shaft (116) on which the bearing (102) and the further bearing (310) are arranged, wherein a force direction (312) of a pretensioning force of the first bearing ring on the second bearing ring and a further force direction (314) of a pretensioning force of the outer ring on the inner ring extend away from one another towards the common shaft (116), and that the sleeve (112) and the component (110) delimit a space (128) for receiving an adjusting element (160), and wherein the adjusting element (160) is introduced into the space (128) and is designed to fix an axial position of the sleeve (112) with respect to the component (110),
**characterized**
**in that** the space (128) is designed as a bore which extends parallel to the axial direction and which completely penetrates the sleeve (112) and continues into the component (110), and wherein the adjusting element (160) comprises a screw (160).

2. Tensioning device (100) according to Claim 1, wherein the space (128) additionally has a gap which is delimited axially by the sleeve (112) and the housing (110) and runs around in the circumferential direction, and wherein the adjusting element comprises a combination of the screw (160) and of a flange or spacer for insertion into the gap.

3. Tensioning device (100) according to either of the preceding claims, wherein the sleeve (112) has a radially extending collar (118) which is designed to support the first bearing ring (106) in the axial direction, and wherein the sleeve (112) has an axial gradation (120) which is designed to at least partially enclose a volume (122) with the component (110), with the result that a build-up of a pressure by a liquid in the volume (122) causes a displacement of the first bearing ring (106) by the sleeve (112) with respect to the component (110) in the axial direction.

4. Tensioning device (100) according to either of Claims 1 and 2, wherein the sleeve (112) bears against the first bearing ring (106) by way of a contact surface which is substantially parallel to the axial direction, and furthermore has a conical surface (156) which faces away from the contact surface and which bears against a counter-surface of the component (110).

5. Tensioning device (100) according to one of the preceding claims, wherein the bearing (102) has an outside diameter of at least 1500 millimetres.

6. Wind turbine having a tensioning device (100) according to one of the preceding claims.

7. Method (400) for pretensioning a bearing by means of a tensioning device (100) according to Claim 1, comprising:
coupling (410) a component to a first bearing ring of the bearing;
supporting (415) the component by means of a supporting element with respect to a second bearing ring of the bearing in such a way that a closed force flow occurs from the first bearing ring via the component and the supporting element to the second bearing ring; and
displacing (420) a sleeve, which is arranged between the first bearing ring and the component, with respect to the component in the axial direction in such a way that a change is brought about in a pretensioning force which is transmitted in the radial direction and/or in the axial direction between the first and the second bearing ring of the bearing.

## Revendications

1. Dispositif de serrage (100) pour le serrage avec précontrainte d'un palier (102), comprenant :
le palier (102) ayant une première bague de palier (106) et une deuxième bague de palier (108), le palier (102) étant réalisé de manière à transmettre une force de précontrainte dans la direction radiale et/ou dans la direction axiale entre la première bague de palier (106) et la deuxième bague de palier (108) ;
un composant (110) accouplé à la première bague de palier (106) ;
un élément de support (101) pour supporter le composant (110) contre la deuxième bague de palier (108) de telle sorte qu'il se produise un flux de forces fermé de la première bague de palier (106) jusqu'à la deuxième bague de palier (108) par le biais du composant (110) et de l'élément de support (101) ; et
une douille (112) disposée de manière déplaçable axialement entre la première bague de palier (106) et le composant (110), qui est réalisée de manière à provoquer une variation de la force de précontrainte dans le cas d'un déplacement axial de la douille (112) par rapport au composant (110), la première bague de palier (106) étant une bague extérieure et la deuxième bague de palier (108) étant une bague intérieure, et le composant (110) comprenant un boîtier fixe,
l'élément de support (101) comprenant un palier supplémentaire (310) ayant une bague intérieure et une bague extérieure, ou correspondant au palier supplémentaire (310), et le dispositif de serrage comprenant en outre un arbre commun (116) sur lequel sont disposés le palier (102) et le palier supplémentaire (310), une direction de force (312) d'une force de précontrainte de la première bague de palier appliquée à la deuxième bague de palier et une direction de force supplémentaire (314) d'une force de précontrainte de la bague extérieure appliquée à la bague intérieure vers l'arbre commun (116) s'étendant à l'écart l'une de l'autre et que la douille (112) et le composant (110) délimitant un espace (128) pour recevoir un élément de réglage (160), et l'élément de réglage (160) étant introduit dans l'espace (128) et étant réalisé de manière à fixer une position axiale de la douille (112) par rapport au composant (110), **caractérisé en ce que**
l'espace (128) est réalisé sous la forme d'un alésage s'étendant parallèlement à la direction axiale, qui traverse complètement la douille (112) et qui se prolonge dans le composant (110), l'élément de réglage (160) comprenant une vis (160) .

2. Dispositif de serrage (100) selon la revendication 1, dans lequel l'espace (128) présente en outre une fente qui est délimitée axialement par la douille (112) et le boîtier (110), et qui s'étend circonférentiellement dans la direction périphérique, et dans lequel l'élément de réglage comprend une combinaison de la vis (160) et d'une bride ou d'un élément d'espacement à introduire dans la fente.

3. Dispositif de serrage (100) selon l'une quelconque des revendications précédentes, dans lequel la douille (112) présente un collet (118) s'étendant radialement, qui est réalisé pour supporter la première bague de palier (106) dans la direction axiale, et dans lequel la douille (112) présente un épaulement (120) qui est réalisé pour former au moins en partie un volume (122) avec le composant (110) de telle sorte qu'une augmentation d'une pression par un liquide dans le volume (122) provoque un déplacement dans la direction axiale par la douille (112) de la première bague de palier (106) par rapport au composant (110).

4. Dispositif de serrage (100) selon l'une quelconque des revendications 1 et 2, dans lequel la douille (112) s'applique avec une surface de contact essentiellement parallèle à la direction axiale contre la première bague de palier (106), et présente en outre une surface conique (156) opposée à la surface de contact, qui s'applique contre une surface conjuguée du composant (110).

5. Dispositif de serrage (100) selon l'une quelconque des revendications précédentes, dans lequel le palier (102) présente un diamètre extérieur d'au moins 1500 mm.

6. Éolienne comprenant un dispositif de serrage (100) selon l'une quelconque des revendications précédentes.

7. Procédé (400) pour réaliser la précontrainte d'un palier au moyen d'un dispositif de serrage (100) selon la revendication 1, comprenant :
un accouplement (410) d'un composant avec une première bague de palier du palier ;
un support (415) du composant au moyen d'un élément de support contre une deuxième bague de palier du palier de telle sorte qu'il se produise un flux de forces fermé de la première bague de palier jusqu'à la deuxième bague de palier par le biais du composant et de l'élément de support ; et
un déplacement (420) dans la direction axiale par rapport au composant d'une douille qui est disposée entre la première bague de palier et le composant, de manière à provoquer une variation d'une force de précontrainte qui est transmise dans la direction radiale et/ou dans la direction axiale entre la première et la deuxième bague de palier du palier.
